# EUROPEAN PATENT APPLICATION

(11) **EP 2 857 959 A1**
(43) Date of publication of application: **08.04.2015**
(21) Application number: 14187342.2
(22) Date of filing: 01.10.2014
(51) Int. Cl.: G06F 7/499, G06F 7/523

(54) **Multiplying fixed-point binary numbers with variable number of fractional bits**

(30) Priority: 01.10.2013 US 201314042939
(71) Applicant: Rockwell Automation Technologies, Inc., Mayfield Heights, OH 44124 (US)
(72) Inventor: Radtke, Christopher K., New Berlin, WI 53151 (US)
(74) Representative: Grünecker Patent- und Rechtsanwälte PartG mbB

(57) **Abstract**

Methods and systems for multiplying varying cast numbers are described herein. By using information related to the inputs to be multiplied, a single multiplier module may be used to multiply many different type cast numbers. These systems and methods may reduce hardware costs and complexity, reduce size of the circuitry, and/or reduce the complexity of the logic, among many other benefits. These systems and methods may be used with in industrial controllers in and industrial environment.

## Description

### TECHNICAL BACKGROUND

Many precise calculations need to occur in industrial control devices to insure proper controlling of various industrial devices. The industrial control devices may include motion and motor controllers, among many other industrial control devices. The industrial devices being controlled may include motors, and multi-axis robots within complex manufacturing processes. The precision and accuracy of the numbers may be vitally important to properly control the industrial devices. The industrial control devices may include application-specific integrates circuits, printed circuit boards, and/or other electronic components.

When multiplying fixed point or floating point numbers using circuit devices of a field programmable gate array (FPGA), application-specific integrates circuit (ASIC), and/or a printed circuit board (PCB) or other electronic configuration, designers often include a multiplier module for every different type of fixed point number multiplication, which the electronic device requires. This may be expensive and use a relatively large amount of space for the ASIC or other electronic configuration. It may be advantageous to use a single multiplier module for multiplying all fixed point numbers required.

### OVERVIEW

In various embodiments, methods and systems multiplying varying binary fixed point numbers are described herein. In an example, a system for multiplying varying binary fixed point numbers for an industrial control device is described. The system includes a multiplier module capable of receiving at least two binary fixed point numbers, and a processor capable of receiving information relating to the at least two binary fixed point numbers, where the multiplier module is further capable of multiplying the at least two binary fixed point numbers to create an output number, and where the processor is further capable of determining the result of the multiplied at least two binary fixed point numbers, based at least in part on the information relating to the at least two binary fixed point numbers.

In another example, a method for multiplying varying binary fixed point numbers for an industrial control device is described. The method includes receiving at least two binary fixed point numbers at a multiplier module, receiving information relating to the at least two binary fixed point numbers at a processor, multiplying the at least two binary fixed point numbers by the multiplier module to create an output number, and determining the result of the multiplied at least two binary fixed point numbers by the processor, based at least in part on the information relating to the at least two binary fixed point numbers.

This overview is provided to introduce a selection of concepts in a simplified form that are further described below in the Technical Disclosure. It should be understood that this Overview is not intended to identify key features or essential features of the claimed subject matter, nor is it intended to be used to limit the scope of the claimed subject matter.

### BRIEF DESCRIPTION OF THE DRAWINGS

Figure 1 illustrates an example system for multiplying varying fixed point numbers.
Figure 2 illustrates an example system for multiplying varying fixed point numbers.
Figure 3 illustrates an example system and method for multiplying varying types of fixed point binary numbers.
Figure 4 illustrates a flow chart of an example method of multiplying varying binary fixed point numbers.
Figure 5 illustrates an example system and method for multiplying varying types of fixed point binary numbers.

### DETAILED DESCRIPTION

The following description and associated drawings teach the best mode of the invention. For the purpose of teaching inventive principles, some conventional aspects of the best mode may be simplified or omitted. The following claims specify the scope of the invention. Some aspects of the best mode may not fall within the scope of the invention as specified by the claims. Thus, those skilled in the art will appreciate variations from the best mode that fall within the scope of the invention. Those skilled in the art will appreciate that the features described below can be combined in various ways to form multiple variations of the invention. As a result, the invention is not limited to the specific examples described below, but only by claims and their equivalents.

Many precise calculations need to occur in industrial control devices to insure proper controlling of various industrial devices. The industrial control devices may include motion and motor controllers, among many other industrial control devices. The industrial devices being controlled may include motors, and multi-axis robots within complex manufacturing processes. The precision and accuracy of the numbers may be vitally important to properly control the industrial devices. The industrial control devices may include application-specific integrates circuits, printed circuit boards, and/or other electronic components.

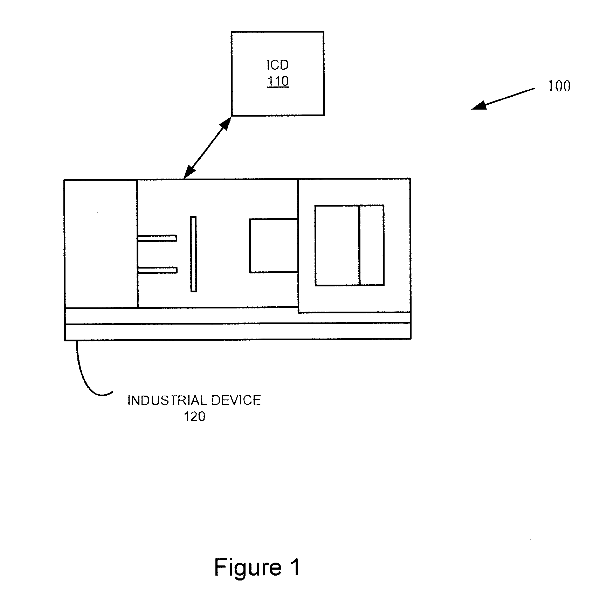

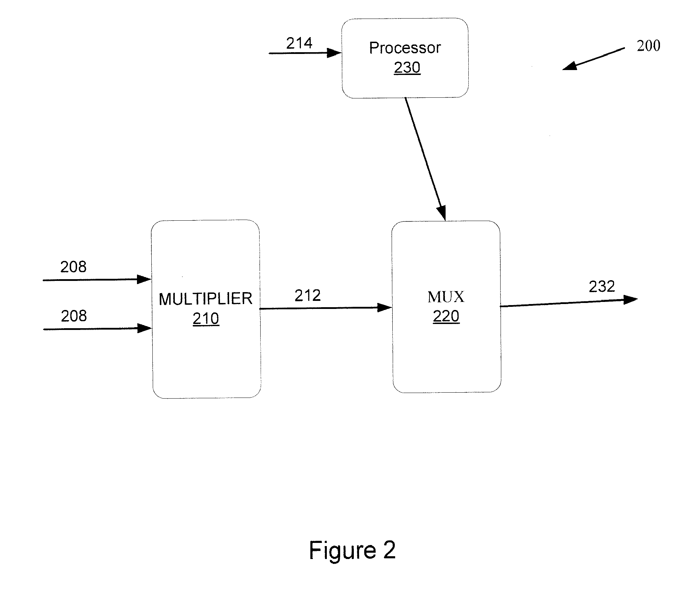

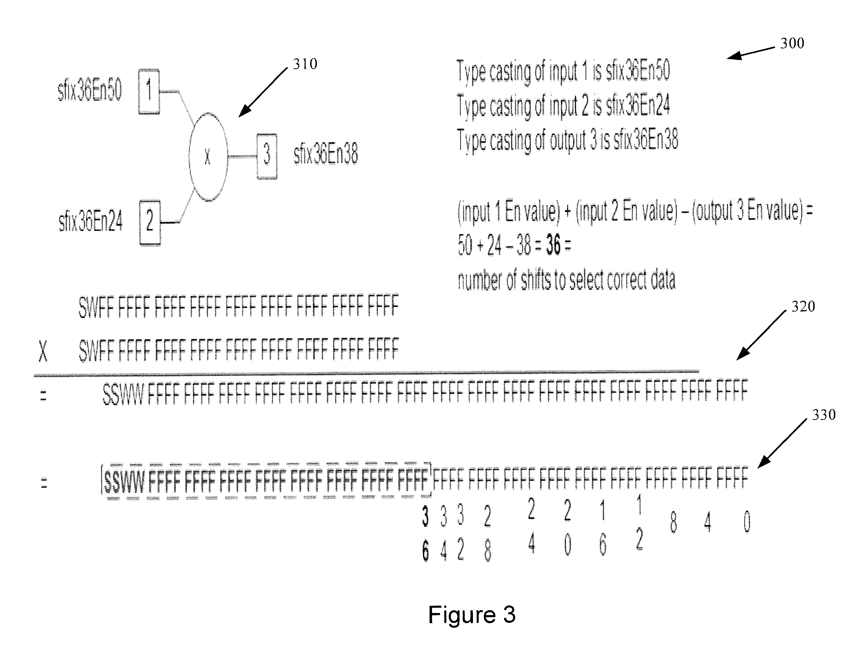

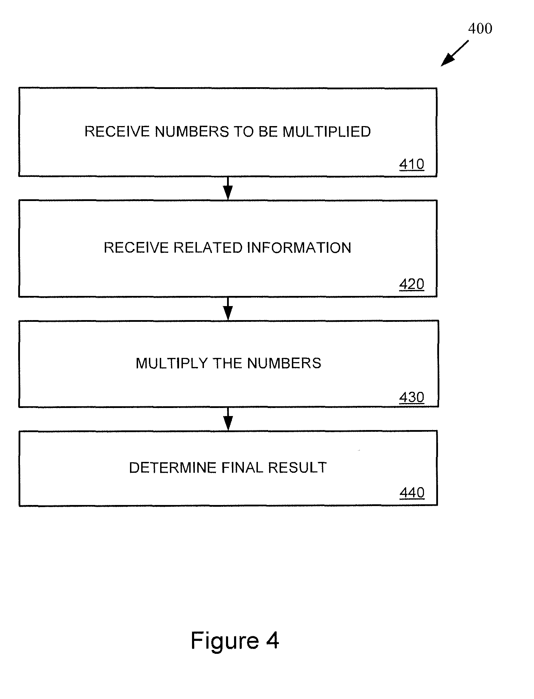

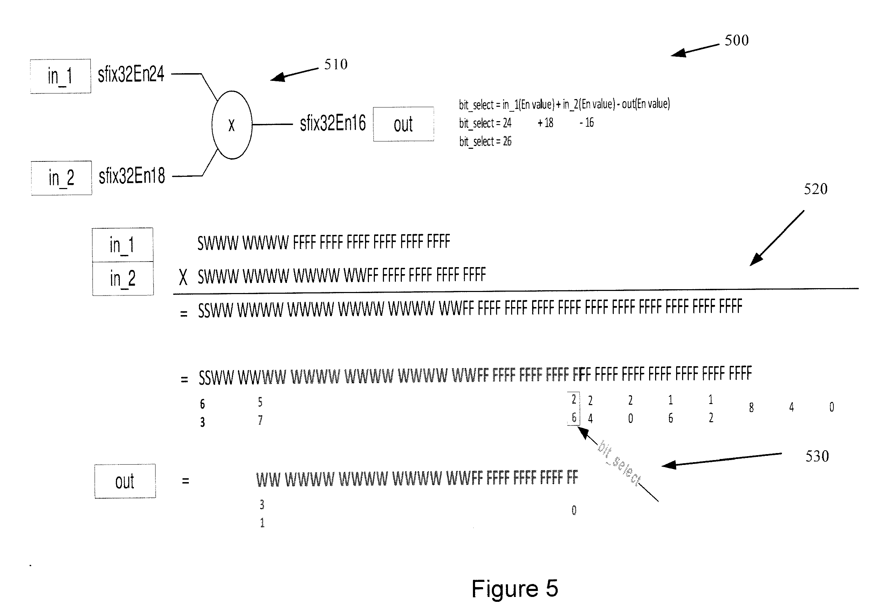

Figure 1 illustrates an example industrial system. Figure 2 illustrates an example system for multiplying varying fixed point numbers. Figure 3 illustrates an example system for multiplying varying fixed point numbers. Figure 4 illustrates a flow chart of an example method of creating an industrial system simulation. Figure 5 illustrates an example system for multiplying varying fixed point numbers.

Referring now to Figure 1, illustrated is an example industrial system 100. Industrial system includes an industrial control device 110, which is capable of communicating with, and controlling, industrial device 120.

In an example, the industrial system 100 may be a complex manufacturing system where precision control of industrial devices is needed. The industrial control device 110 may include a motor controller, motion controller, or other industrial control device. Industrial device may include a motor, multi-axis robot, or other industrial deivce.

Many precise calculations need to occur in industrial control devices to insure proper controlling of various industrial devices. The industrial control devices may include motion and motor controllers, among many other industrial control devices. The industrial devices being controlled may include motors, and multi-axis robots within complex manufacturing processes. The precision and accuracy of the numbers may be vitally important to properly control the industrial devices. The industrial control devices may include application-specific integrates circuits, printed circuit boards, and/or other electronic components.

Referring now to Figure 2, illustrated is an example system 200, which includes multiplier module 210, multiplexor (MUX) 220, and processor 230. Multiplier module 210 is configured to receive at least two inputs 208 and output an output numbers 212 to be received by MUX 220. Processor 230 may then control MUX 220 to output a final result 232.

Inputs 208 and output number 212 may be in two's complement format or other format. The multiplier module 220 may then multiply the input numbers 208 to produce an output number 212. Inputs 208 may be binary fixed-point numbers with the same or differing number of fractional bits.

Processor 230 may also receive information 214 about the inputs 208. Information 214 may include the type casting of the number, number of fractional bits, and/or the En number associated with the inputs 208 and the output number 222.

The En number and/or the number of fractional bits may be the fraction length of a number used in Matlab Simulink software. The En number and/or the number of fractional bits of a two's complement number may be the number of digits to the right of the decimal point in the two's complement representation of the binary fixed point numbers 212. The En number is an indication of the precision of the number.

Generally the notation for binary fixed-point numbers may be, when given a number sfixedxx_Enyy, sfixed indicates a signed fixed-point type, fixed indicates an unsigned fixed-point type. xx indicates total number of bits, yy indicates total number of fractional bits. This notation may be used in the Mathworks Simulink software.

A more generic notation such as (s,m,f) may be used, where s = number of sign bits (0 or 1), m = number of magnitude bits, and f = number of fractional bits. So, and sfixed36_En20 would be (1,15,20) in this more generic notation.

The inputs 208 may have different En numbers, or differing factions bits. That is, they may have differing number of digits to the right of their decimal point, and/or differing orders of precision. Furthermore, the output number 212 may have an En number different than either of the inputs 208. The En number of the output 212 may be predetermined within the control system.

The processor 230 may add the En numbers of the inputs 208 and subtract the En number of the output number 212 to get a resultant En number. The resultant En number may be applied to the output number 212 to produce the final result 232. The final result 232 may then be used in an industrial control device to control an industrial device.

Processor 230 may be any device capable of accomplishing the tasks provided herein. Processor 230 may be implemented within a single processing device and/or circuitry, but may also be distributed across multiple processing devices or subsystems that cooperate in executing the methods and functions described herein. Examples of processor 230 include general-purpose central processing units, application specific processors, as well as any other type of processing device and/or circuitry. Processor 230 is linked to communication MUX 220 via any type of interface, which allows for communication between the devices.

Similarly MUX 220 and multiplier module 210 may be any device capable of accomplishing the tasks described herein. Furthermore, these devices and their functionality may be accomplished on any one or combination of the different processors/computers/systems/devices in this non-limiting example.

A typical digital signal processing function may require 70 fixed point multiplications with varying type casting of the inputs and outputs. Many toolsets require the inputs and outputs have the same type casting to allow reuse of the multiplier module device. The system and method described above would allow for 1 multiplier module for the same tasks.

Using multiple multiplier modules would increase the logic needed to perform various digital signal processing functions. Furthermore, a FPGA based digital signal processing function would not be possible due to the logic needed to implement many multiplier modules. Therefore, the systems and methods described herein would reduce logic and hardware needed, as well as reduce size and cost for the system.

The systems and methods described herein would allow any combination of type cast fixed point numbers to be multiplied using a single multiplier module. The function can use a shift register or multiplexor to implement. The systems and methods described herein allow computationally intense functions to be implemented with reduced logic in an FPGA or ASIC.

The systems and methods described herein allow for complex DSP functions to be implemented in FPGAs or ASICs with minimal logic usage while maintaining high level of performance. The systems and methods described herein may allow for smaller and less costly devices to be used in products, and can be licensed to companies developing automated code generation tools for control system design.

Figure 3 illustrates an example system 300 and method for multiplying varying types of fixed point binary numbers. Two numbers with differing type casting are to be multiplied. As shown the type casting of input 1 is sfix36En50. This indicates a 36 bit, signed, fixed point data type with a fraction length of 50. That is, the last 50 digits of the number are the fractional portion of the number.

The type casting of input 2 is sfix36En24. The type casting of the output number is sfix36En38. This indicates a 36 bit, signed, fixed point data type with a fraction length of 38. That is, the last 38 digits of this number are the fractional portion of that number.

The type casting of the output 3 is sfix36En38. This indicates a 36 bit, signed, fixed point data type with a fraction length of 38. That is, the last 38 digits of the output number are the fractional portion of the number.

As shown, input 1 and 2 are inputted into multiplier module 220. Output 320 results after the multiply. The En of input 1 is added to the En of input 2 (50 + 24). Then the En of the output is subtracted (50 + 24 - 38), which results in a final En of 36. The final result 230 will be the output 320, with the decimal placed 36 positions to the left. That is, there are 36 digits to the right of the decimal in the final answer 330.

Figure 4 illustrates a flow chart of an example method of multiplying varying binary fixed point numbers (400). Various operations of this method may be performed by one or more processing systems, and there is no need to tie any operation to any specific processing system as general purpose computers/processors may be configured to operate as systems capable of performing the operations of the method described herein.

Method 400 includes receiving at least two varying binary fixed point numbers 410, receiving related information 420, multiplying the numbers 430, and determining the final result 440. Receiving numbers 410 may include receiving inputs 208 to be multiplied by multiplier module 210.

A processing device 230 may receive information 214 (420) related to the inputs 208 and the output number 212. In an example, the information may include the type casting of the numbers as well as the En of the numbers. The processor may then add the En numbers of the inputs 208, and subtract the En of the output 212 to get a resulting En number, which may be used in determining the final result 232.

Multiplier module 220 may then multiply the numbers 208 (430). In an example the numbers may be two's complement, binary fixed point numbers with varying type casting.

The final result 232 may then be determined (440). This may be accomplished via processor 230 and/or by any device capable of accomplishing these tasks. The determining the final result of the multiplied at least two binary fixed point numbers (440), may be accomplished in part using the information relating to the inputs 208 and the output number 212.

In an example, the determining by the processor (440) includes moving the decimal of the output number to the left a resultant En number of places to determine the final result of the multiplied inputs 208. The determined final result 232 of the multiplied inputs 208 can be used by an industrial control device in controlling an industrial device. The industrial control device can include a motion controller, a motor controller, and/or a programmable logic controller, among many others.

In an example, the En number is the number of digits to the right of a decimal point in a two's compliment representation of the binary fixed point numbers.

Figure 5 illustrates an example system 500 and method for multiplying varying types of fixed point binary numbers. Two numbers with differing type casting are to be multiplied. As shown the type casting of input 1 is sfix32En24. This indicates a 32 bit, signed, fixed point data type with a fraction length of 24. That is, the last 24 digits of the number are the fractional portion of the number.

The type casting of input 2 is sfix32En18. This indicates a 32 bit, signed, fixed point data type with a fraction length of 18. That is, the last 18 digits of the number are the fractional portion of the number. The type casting of the output number is sfix32En16. This indicates a 32 bit, signed, fixed point data type with a fraction length of 16. That is, the last 16 digits of the number are the fractional portion of the number.

As shown, input 1 and 2 are inputted into multiplier module 510. Output 520 results after the multiply. The En of input 1 is added to the En of input 2 (24 + 18). Then the En of the output is subtracted (24 + 18 - 16), which results in a final En of 26. The final result 530 will be the output 420, with the decimal placed 26 positions to the left.

The above description and associated figures teach the best mode of the invention. The following claims specify the scope of the invention. Note that some aspects of the best mode may not fall within the scope of the invention as specified by the claims. Those skilled in the art will appreciate that the features described above can be combined in various ways to form multiple variations of the invention. As a result, the invention is not limited to the specific embodiments described above, but only by the following claims and their equivalents.

## Claims

1. A system for multiplying varying binary fixed point numbers for an industrial control device, comprising:
a multiplier module (210) capable of receiving at least two binary fixed point numbers;
a processor (230) capable of receiving information relating to the at least two binary fixed point numbers;
wherein the multiplier module is further capable of multiplying the at least two binary fixed point numbers to create an output number; and
wherein the processor is further capable of determining the final result of the multiplied at least two binary fixed point numbers, based at least in part on the information relating to the at least two binary fixed point numbers and the output number.

2. The system of claim 1, wherein the information related to the at least two binary fixed point numbers and the output number comprises a number of fractional bits of the at least two binary fixed point numbers.

3. The system of claim 2, wherein the determining by the processor comprises adding the number of fractional bits of the at least two binary fixed point numbers and subtracting the number of fractional bits of the output number to create a resultant number of fractional bits.

4. The system of claim 3, wherein the determining by the processor comprises moving a decimal of the output number to the left a resultant number of fractional bits to determine the final result of the multiplied at least two binary fixed point numbers.

5. The system of claim 4, wherein the determined final result of the at least two binary fixed point numbers is used by an industrial control device in controlling an industrial device.

6. The system of claim 5, wherein the industrial control device comprises a motion controller, a motor controller, and/or a programmable logic controller.

7. The system of claim 1, further comprising a multiplexor capable of receiving the output number from the multiplier module and outputting the determined final result and wherein the processor is capable of controlling the multiplexor for outputting the determined final result.

8. A method for multiplying varying binary fixed point numbers, comprising:
receiving at least two binary fixed point numbers at a multiplier module;
receiving information relating to the at least two binary fixed point numbers at a processor;
multiplying the at least two binary fixed point numbers by the multiplier module to create an output number; and
determining a final result of the multiplied at least two binary fixed point numbers by the processor, based at least in part on the information relating to the at least two binary fixed point numbers and the output number.

9. The method of claim 8, wherein the information related to the at least two binary fixed point numbers comprises a number of fractional bits of the at least two binary fixed point numbers.

10. The method of claim 9, wherein the determining comprises adding the number of fractional bits of the at least two binary fixed point numbers and subtracting the number of fractional bits of the output number to create a resultant number of fractional bits.

11. The method of claim 10, wherein the determining comprises moving a decimal of the output number to the left the resultant number of fractional bits of digits to determine the final result of the multiplied at least two binary fixed point numbers.

12. The method of claim 8, wherein the method is implemented within and industrial control device.

13. The method of claim 8, wherein the En number is the number of digits to the right of a decimal point in a two's compliment representation of the binary fixed point numbers.

14. One or more computer readable storage media having program instructions stored thereon for multiplying varying binary fixed point numbers that, when executed by an industrial control device, direct the industrial control device to at least:
receive at least two binary fixed point numbers at a multiplier module;
receive information relating to the at least two binary fixed point numbers at a processor;
multiply the at least two binary fixed point numbers by the multiplier module to create an output number; and
determine a final result of the multiplied at least two binary fixed point numbers by the processor, based at least in part on the information relating to the at least two binary fixed point numbers and the output number.

15. The one or more computer readable storage media of claim 14 wherein the information related to the at least two binary fixed point numbers comprises a number of fractional bits of the at least two binary fixed point numbers.
